# DEMANDE DE BREVET EUROPEEN

(11) **EP 0 766 491 A2**
(43) Date de publication de la demande: **02.04.1997**
(21) Numéro de dépôt: 96402019.2
(22) Date de dépôt: 24.09.1996
(51) Int. Cl.: H04Q 7/38

(54) **Système cellulaire de radiocommunications mobiles, station de base et dispositif de contrôle correspondants**

(30) Priorité: 26.09.1995 FR 9511265
(71) Demandeur: ALCATEL CIT, 75008 Paris (FR)
(72) Inventeur: Dupuy, Pierre, 75017 Paris (FR)
(74) Mandataire: El Manouni, Josiane

(57) **Abrégé**

Système cellulaire de radiocommunications mobiles, système comportant des moyens pour sélectionner, pour une position donnée d'un mobile, la meilleure cellule à laquelle accéder, comportant eux-mêmes:
- des moyens, dits premiers moyens, pour déterminer la distance du mobile (M) par rapport à la station de base (BTS) d'une cellule avec laquelle il est en relation, par mesure de temps de propagation entre mobile (M) et station de base (BTS).
- des moyens, dits deuxièmes moyens, pour lever l'indétermination liée à la direction dans laquelle se situe ce mobile (M) par rapport à cette station de base (BTS),
- des moyens, dits troisièmes moyens, pour déterminer, à partir des résultats fournis par lesdits premiers et deuxièmes moyens, sous la couverture de quelle cellule se trouve le mobile, cette cellule constituant ladite meilleure cellule,
caractérisé en ce que lesdits deuxièmes moyens comportent eux-mêmes des moyens pour rendre ladite levée d'indétermination indépendante de l'état synchronisé ou non de ce système.

## Description

La présente invention concerne les systèmes cellulaires de radiocommunications mobiles.

La présente invention concerne plus particulièrement, mais non exclusivement, les systèmes cellulaires de radiocommunications mobiles dans lesquels l'accès par un mobile à une cellule s'effectue grâce à une fréquence particulière propre à cette cellule, dite fréquence balise, sur laquelle sont notamment diffusées des informations de synchronisation permettant au mobile de se synchroniser sur la station émettrice-réceptrice de cette cellule, appelée aussi station de base, et sur laquelle sont également échangées des informations permettant à un mobile d'accéder au système en vue d'établir une communication.

Ces fréquences balise sont en général émises en permanence pour permettre aux mobiles qui les écoutent d'effectuer des mesures en vue de sélectionner à chaque instant la meilleure de ces cellules, à laquelle accéder.

Ainsi, notamment dans les systèmes utilisant la technique dite de saut de fréquence (qui permet notamment d'améliorer la qualité de transmission en présence de fading) est généralement prévue une émission séparée et permanente de la fréquence balise.

Or ceci est pénalisant en termes d'efficacité spectrale.

Il est connu, du document US 4 723 266, ou du document WO 93/12589, un système cellulaire de radiocommunications mobiles composé de deux types de cellules (telles que des micro-cellules et des cellules parapluie) dont les unes, placées, du point de vue de leur couverture radioélectrique, dans la dépendance des autres, ne possédent pas de fréquence balise, et dans lequel l'accès par un mobile à une cellule sans fréquence balise est réalisé via une cellule avec fréquence balise, un changement de cellule (ou "handover") étant ensuite effectué vers cette cellule sans fréquence balise.

Dans un tel système se pose le problème de sélectionner, pour une position donnée du mobile, la meilleure cellule à laquelle accéder, puisque l'écoute des fréquences balise ne peut plus être réalisée dans le cas de cellules sans fréquence balise.

Dans les documents précités, ce problème est résolu en prévoyant, dans chaque cellule, en relation ou non avec un mobile, des moyens particuliers pour écouter ce mobile, ceci permettant au système de déterminer, par comparaison des différents résultats de mesure ainsi obtenus, cette meilleure cellule. Ceci a notamment pour inconvénient de nécessiter, dans les cellules sans fréquence balise, des équipements spécifiques, en plus des équipements nécessaires à l'acheminement des informations utiles.

La présente invention a notamment pour but d'éviter cet inconvénient.

La présente invention est cependant également applicable aux systèmes cellulaires de radiocommunications mobiles dans lesquels toutes les cellules possèdent une fréquence balise.

Dans de tels systèmes, il est en outre connu, du document FUNK-TECHNIK, vol. 41, n° 4, Avril 1986, HEIDELBERG DE, pages 146-149, XP002006000, HALAMEK ET AL.:"Zeligrenzdetektion mit relativer Entfernungsmessung in Netz C", d'effectuer une sélection de cellule en déterminant la position d'un mobile grâce à une mesure de différence de temps de propagation de ce mobile par rapport à deux stations de base.Plus précisément, une station de base BSa avec laquelle le mobile est en relation effectue une mesure du temps de propagation ta entre cette station de base et ce mobile, puis transmet ce temps de propagation à ce mobile qui le réémet alors, auquel cas ce temps de propagation est notamment reçu par une autre station de base BSb qui peut alors, à supposer que le système soit synchronisé, c'est-à-dire que ces stations de base soient synchronisées, déterminer le temps de propagation tb entre ce mobile et cette station de base BSb, et donc déterminer la différence entre les temps de propagation ta et tb.Une telle solution a donc essentiellement pour inconvénient de ne fonctionner que dans le cas d'un système synchronisé.

La présente invention a notamment pour but d'éviter cet inconvénient.

La présente invention a ainsi pour objet un système cellulaire de radiocommunications mobiles, ce système comportant des moyens pour sélectionner, pour une position donnée d'un mobile, la meilleure cellule à laquelle accéder, comportant eux-mêmes:
- des moyens, dits premiers moyens, pour déterminer la distance du mobile par rapport à la station de base d'une cellule avec laquelle il est en relation, par mesure du temps de propagation entre ce mobile et cette station de base,
- des moyens, dits deuxièmes moyens, pour lever l'indétermination liée à la direction dans laquelle se situe ce mobile par rapport à cette station de base,
- des moyens, dits troisièmes moyens, pour déterminer, à partir des résultats fournis par lesdits premiers et deuxièmes moyens, sous la couverture de quelle cellule se trouve le mobile, cette cellule constituant ladite meilleure cellule,
et ce système étant essentiellement caractérisé en ce que lesdits deuxièmes moyens comportent eux-mêmes des moyens pour rendre ladite levée d'indétermination indépendante de l'état synchronisé ou non de ce système.

Suivant une autre caractéristique, lesdits deuxièmes moyens comportent, dans le cas d'un mobile en relation avec une cellule à l'occasion d'une demande d'accès à ce système :
- des moyens pour commander un changement de cellule vers une autre cellule,
- des moyens pour déterminer la distance du mobile par rapport à la station de base de cette autre cellule, par mesure du temps de propagation entre ce mobile et cette autre cellule.

Ainsi ladite levée d'indétermination est rendue indépendante de l'état synchronisé on non de ces stations de base grâce au fait que, après avoir mesuré le temps de propagation du mobile par rapport à une station de base, on effectue une commande de changement de cellule (ou "handover") vers une autre cellule afin de mesurer le temps de propagation entre ce mobile et cette autre station de base, cette dernière mesure de temps de propagation n'étant plus ainsi une mesure relative,par rapport à la première station de base, contrairement à ce qui est le cas dans le document cité plus haut, mais une mesure absolue, donc indépendante de l'état synchronisé ou non de ces stations de base.

Suivant une autre caractéristique, lesdits deuxièmes moyens comportent, dans le cas d'un mobile en relation avec ce système à l'occasion d'une communication déjà établie, des moyens de mesure de puissance reçue par ce mobile sur une ou plusieurs fréquences balise.

Ainsi ladite levée d'indétermination est rendue indépendante de l'état synchronisé ou non du système, grâce au fait que, après avoir mesuré le temps de propagation du mobile par rapport à une station de base, on effectue non pas une autre mesure de temps de propagation, mais une mesure de puissance reçue.

Suivant une autre caractéristique, lesdits deuxièmes moyens comportent, dans le cas d'un mobile en relation avec une cellule à l'occasion d'une communication déjà établie, des moyens pour effectuer des mesures de puissance reçue du mobile par la station de base de cette cellule sur des antennes ayant des couvertures radioélectriques disjointes.

Ainsi ladite levée d'indétermination est, de la même façon, rendue indépendante de l'état synchronisé ou non du système, grâce au fait que, après avoir mesuré le temps de propagation du mobile par rapport à une station de base, on effectue non pas une autre mesure de temps de propagation, mais une mesure de puissance reçue.

D'autres objets et caractéristiques de la présente invention apparaîtront à la lecture de la description suivante d'exemples de réalisation, faite en relation avec les dessins ci-annexés dans lesquels :
- la figure 1 rappelle l'architecture générale d'un système cellulaire de radiocommunications mobiles tel que le système GSM par exemple,
- la figure 2 illustre un exemple de réseau cellulaire de radiocommunications mobiles auquel la présente invention est applicable,
- la figure 3 illustre un exemple de réalisation de moyens suivant l'invention permettant de lever l'indétermination liée à la direction dans laquelle se situe un mobile,
- la figure 4 illustre également un exemple de réalisation de moyens suivant l'invention permettant de lever l'indétermination liée à la direction dans laquelle se situe un mobile.

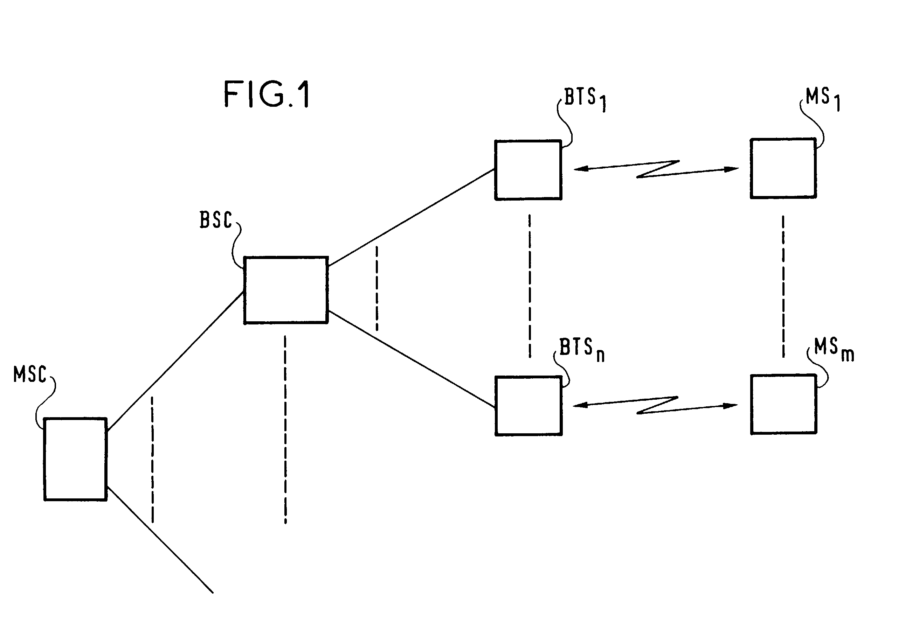

La figure 1 rappelle l'architecture générale d'un système cellulaire de radiocommunications mobiles tel que le système GSM par exemple.

Chaque cellule est équipée d'une station émettrice-réceptrice dite station de base, telle que BTS₁ à BTSₙ.

Chaque station de base est susceptible d'être reliée par une liaison radio à une station mobile, telle que MS₁ à MSₘ, pour permettre une communication intéressant cette station mobile.

Un ensemble de stations de base telles que BTS₁ à BTSₙ est par ailleurs relié, par des liaisons filaires, à un contrôleur de stations de base, tel que BSC, et de même un ensemble de contrôleurs de stations de base tels que BSC est relié à un centre de commutation MSC, l'ensemble formé par les MSC et BSC assurant la gestion des communications, notamment la gestion de la signalisation s'y rapportant.

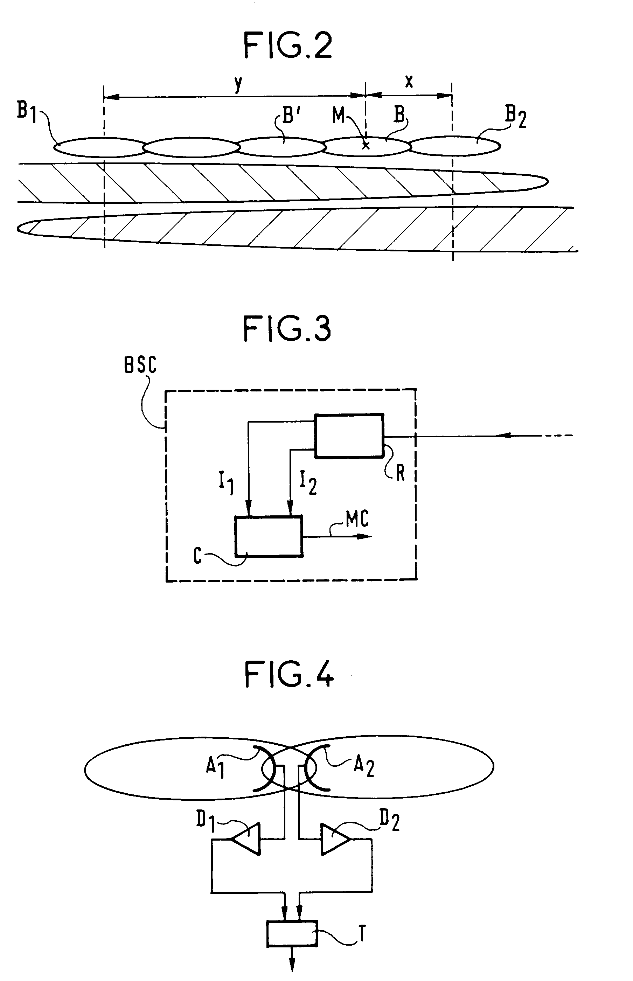

La figure 2 illustre le schéma général d'un exemple de réseau cellulaire de radiocommunications mobiles auquel la présente invention est applicable.

Le réseau cellulaire illustré sur la figure 2 est un réseau micro-cellulaire dit linéaire, formé de micro-cellules de forme allongée mises bout à bout. Un tel réseau est typiquement utilisé dans une zone urbaine, pour assurer la couverture d'une Ne, et l'on peut imaginer, bien que que non illustré, que se superposent à ce réseau d'autres réseaux du même type, destinés par exemple à assurer la couverture de rues parallèles ou perpendiculaires.

Dans l'exemple illustré, seules les cellules extrêmes notées B₁ et B₂ possèdent une fréquence balise, et l'accès par un mobile tel que M à une cellule telle que B ne possédant pas de fréquence balise est réalisé via une cellule possédant une fréquence balise reçue par le mobile M.

Sur la figure 2 on a illustré, par des hachures dans un premier sens, la zone de couverture de la fréquence balise de la cellule extrême de gauche B1, et par des hachures dans un deuxième sens, la zone de couverture de la fréquence balise de la cellule extrême de droite B2, ces zones de couverture étant en fait superposées suivant un même axe horizontal. On remarque ainsi que quelle que soit la position du mobile entre les cellules extrêmes B₁ et B₂, celui-ci est capable de recevoir la fréquence balise de ces cellules, ceci étant dû au faible amortissement lié à la transmission en ligne directe, c'est-à-dire à la forme allongée de ces cellules.

Suivant l'invention, pour sélectionner, pour une position donnée du mobile, la meilleure cellule à laquelle accéder, on détermine la distance du mobile par rapport à la station de base d'une cellule avec laquelle ce mobile est en relation, puis on lève l'indétermination liée à la direction dans laquelle se situe ce mobile par rapport à cette station de base, et on en déduit la position du mobile et donc la cellule sous la couverture de laquelle se trouve ce mobile, dite meilleure cellule.

On décrit maintenant un premier exemple de réalisation, correspondant au cas où le mobile est en relation avec une cellule à l'occasion d'une demande d'accès au réseau par ce mobile, cette cellule étant donc une cellule avec fréquence balise.

Lorsqu'un mobile M est en fonctionnement sans être en communication, il effectue en permanence des mesures de puissance pour déterminer la cellule dont il reçoit le mieux la fréquence balise, par exemple la cellule B₂ sur la figure 2, et il se pré-synchronise sur cette cellule au moyen des informations de synchronisation diffusées sur cette fréquence.

Lorsque ce mobile désire accéder au réseau pour une communication, il transmet sur cette fréquence balise, dans un canal déterminé (canal dit RACH : "Random Access Channel" dans le système GSM par exemple) des informations de demande d'accès au réseau.

La station de base qui reçoit ces informations de demande d'accès au réseau, d'une part se met en relation avec les organes BSC, MSC du système pour déterminer la réponse à apporter au mobile, et d'autre part détermine sa distance par rapport au mobile, en vue de déterminer sous la couverture de quelle cellule se trouve le mobile. Cette détermination de distance est par exemple basée sur une mesure de temps de propagation telle que celle mise en oeuvre, dans un système du type à accès multiple par répartition temporelle (tel que le système GSM par exemple), pour déterminer l'information dite d'avance temporelle ("timing advance") intéressant le mobile.

Une fois déterminée la distance "x" du mobile M par rapport à la station de base BTS2 de la cellule B2, et lorsque cette distance "x" montre que le mobile n'est pas sous la couverture de la cellule B₂, ce qui correspond au cas illustré sur la figure 2, on effectue un changement de cellule (ou "handover") vers la cellule B1 possédant également une fréquence balise reçue par le mobile.

On notera que si le mobile M ne se trouvait pas, contrairement au cas illustré sur la figure 2, entre les cellules B1 et B2, et dans le cas évoqué plus haut de superposition de plusieurs réseaux linéaires destinés par exemple à assurer la couverture de rues parallèles ou perpendiculaires, on effectuerait un changement de cellule, non pas vers la cellule B1, mais vers une autre cellule possédant également une fréquence balise reçue par le mobile (éventuellement, dans le cas de plusieurs fréquences balise reçues par le mobile, on pourrait choisir celle reçue avec la plus forte puissance).

Dans l'exemple considéré ici où on effectue un changement de cellule vers la cellule B1, les échanges d'information relatifs à la procédure d'accès au réseau par le mobile M se poursuivent alors entre le mobile M et la station de base BTS1 de la cellule B1.

La station de base BTS1 effectue alors, à partir des informations transmises par le mobile M (informations transmises en l'occurrence sur un canal dit SACCH : "Slow Associated Control Channel"), une mesure de sa distance "y" par rapport au mobile M, en vue de déterminer, par combinaison avec la distance "x" déterminée précédemment, sous la couverture de quelle cellule sans fréquence balise se trouve le mobile. Cette détermination de la distance "y" permet donc, dans cet exemple, de lever l'indétermination liée à la direction dans laquelle se situe le mobile par rapport à la station de base de la cellule B₂. Cette détermination de la distance "y" est également, par exemple, basée sur une mesure de temps de propagation.

Les distances "x" et "y" ainsi obtenues sont transmises à l'un ou l'autre des organes BSC, MSC, par exemple au contrôleur de station de base BSC dont dépendent les cellules B1 et B2, et y sont combinées pour en déduire la position du mobile M entre les cellules B1 et B2, et donc pour en déduire sous la couverture de quelle cellule B sans fréquence balise se trouve le mobile M.

On notera que dans un système tel que le système GSM par exemple, où les mesures de distance sont déjà transmises au contrôleur de stations de base BSC dont dépendent les cellules B₁ et B₂ (en l'occurrence pour permettre, avec d'autres paramètres, de décider d'un changement de cellule (ou handover) futur, il ne reste plus alors à prévoir dans ce contrôleur de stations de base que des moyens permettant de déduire la cellule B en fonction des distances "x" et "y", ces moyens pouvant être très simples et se limiter par exemple à une table de correspondance.

On a ainsi illustré sur la figure 3 un dispositif de contrôle de stations de base, constitué par exemple par un contrôleur de station de base BSC, mais pouvant aussi être constitué par un centre de commutation MSC, et comportant, en aval de moyens R de réception d'informations issues des stations de base qui lui sont rattachées, des moyens, C, pour combiner une information notée I₁, représentative de la distance "x", et une information notée I₂, représentative de la distance "y", et pour en déduire la meilleure cellule, notée MC.

Une fois déterminée la cellule B, on effectue alors un nouveau changement de cellule ("handover") en l'occurrence de la cellule B₁ vers la cellule B₂, mais avec une fréquence, (ou un jeu de fréquences dans le cas d'un système à saut de fréquence), correspond à la cellule B, cette fréquence ou ce jeu de fréquences étant déterminé, tout comme s'il s'agissait d'une fréquence (ou d'un jeu de fréquences) propre à la cellule B2, par les organes BSC, MSC.

On notera que dans un système tel que le système GSM par exemple, on effectue ainsi un nouveau changement de cellule, en l'occurrence de B1 vers B2, plutôt qu'une nouvelle attribution de canal ("subsequent assignement") dans la cellule B1, pour rompre avec la valeur d'avance temporelle ("timing advance") utilisée dans la cellule B1, et qui ne correspond pas à l'avance temporelle qui devra être utilisée dans la cellule B, cette dernière avance temporelle pouvant alors être déterminée de façon connue, notamment en ayant recours à un handover présynchronisé.

On décrit maintenant un deuxième exemple de réalisation, correspondant au cas où le mobile est en relation avec une cellule à l'occasion d'une communication déjà établie intéressant ce mobile, cette cellule étant dite ici cellule précédente, par opposition à la future meilleure cellule détectée, dite nouvelle cellule.

Dans un système tel que le système GSM par exemple, où la détermination de la distance entre le mobile et la station de base de la cellule précédente est faite en permanence en cours de communication (en vue de déterminer en permanence l'avance temporelle ("timing advance") appliquée au mobile) et où la distance ainsi déterminée en permanence est transmise au contrôleur de station de base dont dépend cette cellule, celui-ci est capable de détecter un accroissement de cette distance, correspondant à une sortie du mobile de la cellule précédente.

Dans ce cas, et dans cet exemple, ce contrôleur de stations de base combine cette mesure de distance avec le résultat de mesures de puissance reçue par le mobile sur une ou plusieurs fréquences balise, ces mesures de puissance étant également transmises à ce contrôleur de stations de base, et cette combinaison étant effectuée en vue de déterminer la position du mobile, et donc d'en déduire sous la couverture de quelle cellule, ou nouvelle cellule, se trouve maintenant le mobile.

Ainsi, si on détecte par exemple que le mobile sort de de la cellule précédente, par exemple la cellule B, et que la puissance reçue par le mobile sur la fréquence balise f_{B1} de la cellule B1 est supérieure à celle reçue par le mobile sur la fréquence balise f_{B2} de la cellule B2, on en déduit que le mobile se trouve maintenant sous la couverture de la cellule référencée B' sur la figure 2.

Suivant une variante, si on détecte par exemple que le mobile sort de la couverture de la cellule précédente, par exemple la cellule B, et que la puissance reçue par le mobile sur la fréquence balise f_{B1} croît (ou que la puissance reçue par le mobile sur la fréquence balise f_{B2} décroît) on en déduit que le mobile se trouve maintenant sous la couverture de la cellule référencée B' sur la figure 2.

Les mesures de puissance reçues par le mobile sur l'une ou l'autre des fréquences balise f_{B1} et f_{B2} servent ainsi à lever l'indétermination liée à la direction dans laquelle se situe le mobile par rapport à la station de base de la cellule B.

On notera que dans un système tel que le système GSM par exemple, où ces mesures de puissance sont transmises par le mobile à la station de base de la cellule avec laquelle il est en relation, sur un canal dit SACCH (Slow Associated Control Channel), cette station de base les retransmettant au contrôleur de stations de base, il ne reste plus alors à prévoir, dans ce contrôleur de stations de base, que des moyens permettant de déterminer la cellule B' en fonction d'une part de mesures de distance, d'autre part des mesures de puissance reçue, ces moyens pouvant être très simples et se limiter également, par exemple, à une table de correspondance, déterminée par exemple expérimentalement, ou par le calcul.

Le schéma de la figure 3 peut également être utilisé pour illustrer cet exemple, avec l'information I₁ représentative de mesures de distance et l'information I₂ représentative de mesures de puissance reçue par le mobile sur une ou plusieurs fréquencs balises.

Une fois déterminée la nouvelle cellule B', le dispositif de contrôle de stations de base commande alors un changement de cellule, de celle des cellules B1 et B2 via laquelle le mobile accédait à la cellule précédente, vers l'autre de ces cellules B1 et B2, et avec une fréquence (ou un jeu de fréquences dans le cas où est mis en oeuvre un saut de fréquence) correspondant à la nouvelle cellule.

Comme indiqué plus haut, l'information d'avance temporelle à utiliser dans la nouvelle cellule peut alors être déterminée de façon connue.

Suivant un autre exemple, le contrôleur de stations de base combine, pour déterminer la nouvelle cellule B', une détection d'accroissement de distance correspondant à une sortie du mobile de la cellule précédente, avec le résultat de mesures de puissance reçue du mobile par la station de base de la cellule précédente sur deux antennes de réception ayant des couvertures opposées, telles que les antennes notées A₁ et A₂ sur la figure 3, ces mesures de puissance étant transmises au contrôleur de stations de base.

Ainsi, si on détecte par exemple que le mobile sort de de la cellule précédente, par exemple de la cellule B sur la figure 2, et que la puissance reçue par l'antenne de gauche, A1, de la station de base de la cellule B est supérieure à la puissance reçue par l'antenne de droite, A₂, alors on en déduit que le mobile se trouve maintenant sous la couverture de la cellule référencée B' sur la figure 2.

Dans cet exemple la station de base d'une cellule sans fréquence balise comporte, comme illustré sur la figure 4, outre deux antennes A₁ et A₂, deux moyens de détection de niveau reçu, l'un D₁, détectant le niveau reçu sur l'antenne A₁, l'autre, D₂, détectant le niveau reçu sur l'antenne A₂, et un moyen de traitement, T, permettant de combiner les signaux reçus sur chacune des antennes A₁ et A₂ (par exemple en retenant le plus fort des deux ou encore en prenant par exemple la somme des deux), pour extraction des informations utiles reçues du mobile par cette station de base.

Dans cet exemple de réalisation, les résultats de mesure de puissance reçue du mobile par les antennes A1 et A2 de la station de base précédente permettent donc de lever l'indétermination liée à la direction dans laquelle se situe le mobile par rapport à la station de base de la cellule précédente.

Dans un système tel que le système GSM par exemple, où les résultats de mesure de puissance reçue du mobile par une station de base sont classiquement transmis au contrôleur de stations de base, il ne reste donc plus à prévoir que des moyens pour transmettre à ce contrôleur de stations de base deux résultats de mesure (correspondant aux deux antennes A₁ et A₂) au lieu d'un, et des moyens permettant de déterminer la meilleure cellule en fonction d'une part de mesures de distance, d'autre part de mesures de puissance reçue, ces moyens pouvant être très simples et se limiter également, par exemple, à une table de correspondance déterminée par exemple expérimentalement, ou par le calcul.

Le schéma de la figure 3 peut également être utilisé pour illustrer de tels moyens pour déterminer la meilleure cellule, avec l'information I1 représentative de mesures de distance et l'information I2 représentative de puissance reçue sur les antennes A₁ et A₂.

On notera que, plus généralement, dans un réseau autre que le réseau linéaire illustré sur la figure 2, on prévoirait un nombre d'antennes ayant des couvertures disjointes, supérieur à deux.

On notera également que bien que la description qui précède ait été faite plus particulièrement, à titre d'exemple, pour le cas d'un système dans lequel au moins une cellule ne possède pas de fréquence balise, et dans lequel l'accès à une telle cellule est réalisé via une cellule possédant une fréquence balise reçue par le mobile, la présente invention n'est pas limitée à un tel exemple d'application.

## Revendications

1. Système cellulaire de radiocommunications mobiles, système comportant des moyens pour sélectionner, pour une position donnée d'un mobile, la meilleure cellule à laquelle accéder, comportant eux-mêmes:
- des moyens, dits premiers moyens, pour déterminer la distance du mobile (M) par rapport à la station de base (BTS) d'une cellule avec laquelle il est en relation, par mesure de temps de propagation entre mobile (M) et station de base (BTS).
- des moyens, dits deuxièmes moyens, pour lever l'indétermination liée à la direction dans laquelle se situe ce mobile (M) par rapport à cette station de base (BTS),
- des moyens, dits troisièmes moyens, pour déterminer, à partir des résultats fournis par lesdits premiers et deuxièmes moyens, sous la couverture de quelle cellule se trouve le mobile, cette cellule constituant ladite meilleure cellule,
caractérisé en ce que lesdits deuxièmes moyens comportent eux-mêmes des moyens pour rendre ladite levée d'indétermination indépendante de l'état synchronisé ou non de ce système.

2. Système selon la revendication 1, caractérisé en ce que lesdits deuxièmes moyens comportent, dans le cas d'un mobile (M) en relation avec une cellule (B2) à l'occasion d'une demande d'accès à ce système :
- des moyens pour commander un changement de cellule vers une autre cellule (B1),
- des moyens pour déterminer la distance du mobile par rapport à la station de base (BTS) de cette autre cellule, par mesure du temps de propagation entre ce mobile et cette autre cellule.

3. Système selon la revendication 2, caractérisé en ce que, au moins une cellule ne possèdant pas de fréquence balise, et l'accès à une telle cellule étant réalisé via une cellule possédant une fréquence balise reçue par le mobile, lesdites cellules (B1, B2) sont des cellules avec fréquence balise reçue par le mobile.

4. Système selon la revendication 1, caractérisé en ce que lesdits deuxièmes moyens comportent, dans le cas d'un mobile en relation avec ce système à l'occasion d'une communication déjà établie, des moyens de mesure de puissance reçue par ce mobile (M) sur une ou plusieurs fréquences balise.

5. Système selon la revendication 1, caractérisé en ce que lesdits deuxièmes moyens comportent, dans le cas d'un mobile (M) en relation avec une cellule à l'occasion d'une communication déjà établie, des moyens pour effectuer des mesures de puissance reçue du mobile par la station de base (BTS) de cette cellule sur des antennes (A₁, A₂) ayant des couvertures radioélectriques disjointes.

6. Station de base pour système cellulaire de radiocommunications mobiles suivant la revendication 5, caractérisée en ce qu'elle comporte des antennes (A₁, A₂) ayant des couvertures radioélectriques disjointes.

7. Dispositif (BSC, MSC) de contrôle de stations de base pour système cellulaire de radiocommunications mobiles suivant l'une des revendications 1 à 5, caractérisé en ce que lesdits troisièmes moyens sont situés dans ce dispositif de contrôle de stations de base.
